# EUROPEAN PATENT APPLICATION

(11) **EP 1 813 405 A1**
(43) Date of publication of application: **01.08.2007**
(21) Application number: 07101018.5
(22) Date of filing: 23.01.2007
(51) Int. Cl.: B29C 33/40, B29C 35/06, F16L 11/08, C08J 5/06, C08L 21/00

(54) **Curing sleeve reinforced with chopped carbon fibers**

(30) Priority: 25.01.2006 US 339170
(71) Applicant: THE GOODYEAR TIRE & RUBBER COMPANY, Akron, Ohio 44316-0001 (US)
(72) Inventor: Burrowes, Thomas George, North Canton, NE 44720 (US); Gregg, Michel John William, Lincoln, NE 68502 (US)
(74) Representative: Kutsch, Bernd

(57) **Abstract**

The present invention relates to a sleeve (30) for use in vulcanization process. The sleeve has a cylindrical shape and is constructed of an elastomeric composition comprising a cross-linked rubber and from 5 to 50 phr of chopped carbon fibers (36).

## Description

### Technical field of the invention

The invention relates to a sleeve usable in constructing power transmission belts, and more particularly to the selection of the materials used in the construction of a sleeve being usable as curing sleeve in a vulcanization process.

### Background of the invention

The present invention is directed to the manufacturing equipment used in constructing a power transmission belt of the type that is particularly suited for use in short center drives, exercise equipment, automotive drives, farm equipment, so-called torque sensing drives, and other applications where shock loads of varying belt tension are imposed on the belt, and where the belt is operated at variable speeds, and often spring-loaded to control its tension, and the like. In the construction of such a power transmission belt, a strip of uncured rubber (typically containing textile reinforcement) is rolled onto a cylindrical building drum. The building drum with the uncured rubber strip is then inserted into a pot heater for curing. The pot heater has a free standing, rubber curing sleeve which is taller than the building drum and has heavy aluminum or steel lid to close and seal the top end of the sleeve after the building drum is inserted. Then pressurized steam is applied to the outer surface of the sleeve to force the inner surface of the sleeve against the uncured rubber around the building drum. Concurrently, pressurized steam is applied into the center of building drum. The steam is left on for a period of time, typically 20 minutes to an hour or more until the rubber wound onto the building drum is cured. Then the steam is turned off and the building drum with the cured strip of rubber is removed,

In the past, the rubber curing sleeve typically had a wall thickness of 0.5 to 0.9 inches and was 40 to 50 inches long. The problem with the prior art curing sleeve was that it had to have a large wall thickness that would allow it to be free standing. This thickness increased the time for the curing of the uncured rubber around the building drum. Further, the repeated heating and cooling caused the curing sleeve to shrink so that it was not long enough to seal the building drum within the sleeve with the steel lid. Then, the sleeve had to be discarded.

US-B- 6,918,849 discloses a power transmission belt, which may contain 5 to 60 phr of chopped carbon fibers with a sizing agent applied to the surface of the fibers.

### Summary of the invention

According to the invention, there is disclosed a sleeve suitable for use in vulcanization process according to claim 1.

Dependent claims refer to preferred embodiments of the invention.

Preferably, the sizing agent on the chopped carbon fiber ranges from 1 percent to 10 percent by weight, more preferably from 3 to 8 percent by weight, of the chopped fiber and/or is an epoxy resin.

Preferably, the elastomeric composition comprises EP(D)M, hydrogenated acrylonitrile rubber, styrene-butadiene rubber, natural rubber, or chlorinated polyethylene.

### Brief description of the drawings

Reference will be made in detail to preferred embodiments of the invention, examples of which may be illustrated in the accompanying drawing figures.

Figure 1 is a view of the prior art curing sleeve surrounding a cylindrical building drum and disposed in a pot heater; and

Figure 2 is a fragmentary perspective view illustrating the curing sleeve, according to the invention.

### Detailed description of the invention

The present invention relates to a sleeve 30 usable as curing sleeve for curing a power transmission belt. The sleeve 30 of the present invention may be embodied in accordance with the conventional-type design of curing sleeves used in curing a power transmission belt. In the design of the sleeve 30 of the present invention, the sleeve is reinforced with chopped carbon fiber.

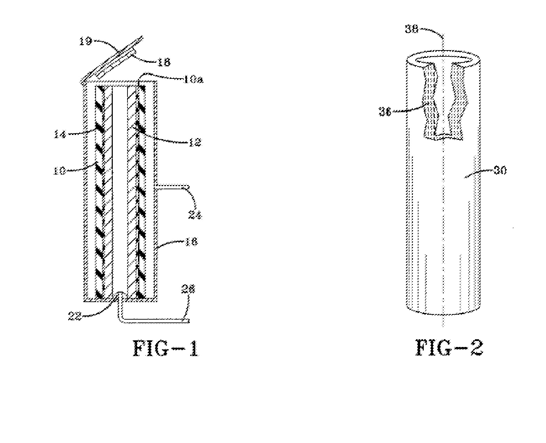

Referring to FIG. 1 of the drawings, there is illustrated prior art curing sleeve 10 surrounding a cylindrical building drum 12 having an uncured power transmission belt 14 typically 40 to 48 inches, wrapped thereabout and disposed in a pot heater or autoclave 16 having a flat bottom. Once the uncured power transmission belt 14 is wrapped around the cylindrical building drum 12 (typically with a 20 to 120 inch circumference, the wrapped drum is inserted into the free standing rubber sleeve 10 and centered with a spud 22. Then, a metal (typically steel or aluminum) plate 18 is placed on the top end of the sleeve 10 and seals the sleeve. Note that the sleeve 10 is higher than the building drum 12. While the steel plate is shown attached to the lid 19 of the pot heater 16, it is within the terms of the invention for the lid to be free. Next, the lid 19 is closed and steam is inserted by means such as a steam pipe 24 into the side of the pot heater. Concurrently, steam is directed into the hollow drum 12 through a steam pipe 26 and spud 22. The steam, typically 300 to 400°F and 100 to 200 pounds per square inch (psi) on the outside of the rubber sleeve 10 presses the lid 18 to seal the upper opening 10a of the sleeve; and presses on the sleeve to exert an equal pressure on the uncured belt 14 wrapped around the drum 12. Concurrently, the steam within the hollow drum 12 heats the drum and the uncured belt 14. The steam is applied, typically for 20 minutes to 1 hour until the belt 14 is cured. Then the steam flow is suspended, the lid 19 is opened, the cover 18 is removed from sleeve 10 and the cylindrical building drum 12 with the cured belt wrapped there about is removed.

In the prior art, the sleeve 10 tended to shrink with continued usage until it was shorter than the building drum and unable to be sealed with the plate 18 once the building drum was inserted. Then, the sleeve had to be discarded. Also, the prior art sleeve was typically 0.5 to 0.9 inches thick so as to have enough stability. With additional thickness, the belt cures more slowly, 20 minutes to 1 hour.

The elastomeric composition for use in the sleeve 30 of the present invention contains a cross-linked elastomer or rubber. Such rubber may be selected from the group consisting of ethylene alpha olefin rubber, silicone rubber, polychloroprene, polybutadiene, epichlorohydrin, acrylonitrile rubber, hydrogenated acrylonitrile rubber, zinc salts of unsaturated carboxylic acid ester grafted hydrogenated nitrile butadiene elastomer, natural rubber, synthetic cis-1,4-polyisoprene, styrene-butadiene rubber, ethylene-vinyl-acetate copolymer, ethylene methacrylate copolymers and terpolymers, chlorinated polyethylene, chlorosulfonated polyethylene, alkylated chlorosulfonated polyethylene, trans-polyoctenamer, polyacrylic rubber, non-acrylated cis-1,4-polybutadiene, and mixtures thereof. The preferred rubbers are EP(D)M, hydrogenated acrylonitrile rubber, natural rubber, polybutadiene, styrene-butadiene rubber and chlorinated polyethylene.

The ethylene-alpha-olefin elastomer includes copolymers composed of ethylene and propylene units (EPM), ethylene and butene units, ethylene and pentene units or ethylene and octene units (EOM) and terpolymers composed of ethylene and propylene units and an unsaturated component (EPDM), ethylene and butene units and an unsaturated component, ethylene and pentene units and an unsaturated component, ethylene and octene units and an unsaturated component, as well as mixtures thereof. As the unsaturated component of the terpolymer, any appropriate non-conjugated diene may be used, including, for example, 1,4-hexadiene, dicyclopentadiene or ethylidenenorbornene (ENB). The ethylene-alpha-olefin elastomer preferred in the present invention contains from 35 percent by weight to 90 percent by weight of the ethylene unit, from 65 percent by weight to 5 percent by weight of the propylene or octene unit and 0 to 10 percent by weight of the unsaturated component. In a more preferred embodiment, the ethylene-alpha-olefin elastomer contains from 50 percent to 70 percent by weight of the ethylene unit and, in a most preferred embodiment, the ethylene-alpha-olefin elastomer contains from 55 percent to 65 percent of the ethylene unit. The most preferred ethylene-alpha-olefin elastomer is EPDM.

The cross-linked elastomeric composition contains from 5 to 50 parts by weight per hundred of the rubber composition (phr) of chopped carbon fibers preferably treated with a sizing agent. Preferably, from 10 to 30 phr of chopped carbon fiber are present and most preferably from 15 to 20 phr of chopped carbon fiber are present in the cross-linked elastomeric composition. The cross-linked elastomer containing the carbon fiber may be used throughout the sleeve 30.

The carbon fibers may be prepared from a starting material including polyacrylonitrile (PAN), cool tar pitch, rayon petroleum pitch, cool liquefied material or the like. For example, the carbon fiber may be manufactured by known methods, such as disclosed in US-B- 4,197,279, US-B- 4,397,831, US-B- 4,347,279, US-B- 4,474,906 and US-B- 4,522,801. When carbon fiber is produced from PAN, PAN fiber is preoxidized in an oxidizing atmosphere (e.g., air) at 200°C to 300°C and then the thus obtained fiber is carbonized at about from 500°C to 3,000°C. in an inert atmosphere (e.g., N2 or He) to obtain the desired carbon fiber.

The chopped carbon fibers for use in the present invention may range from 0.001 mm to 0.05 mm in diameter. Preferably, the fibers range from 0.002 mm to 0.012 mm in diameter.

As to the length, the chopped carbon fibers range from 0.5 mm to 75 mm. Preferably the chopped fibers range in length of from 1 mm to 10 mm.

Commercially available sources of chopped carbon fibers include a product marketed under the designation PANEX® 33 by Zoltek Company. These fibers are available with an epoxy resin as the sizing agent. The fibers are available in length of 3.17 and 6.35 mm.

It is preferable to have a sizing agent applied to the chopped carbon fiber. The sizing agent may be a thermoplastic resin, a thermosetting resin or a mixture thereof at any proportion including epoxy resins, urethane-modified epoxy resins, polyester resins, phenol resins, polyamide resins, polyurethane resins, polycarbonate resins, polyetherimide resins, polyamideimide resins, polystyrylpyridine resins, polyimide resins, bismaleimide resins, polysulfone resins, polyethersulfone resins, epoxy-modified urethane resins, polyvinyl alcohol resins, polyvinyl pyrrolidone resins, and modified forms of the above resins (a part of the terminal residues of a polymer or a part of the side chains of a polymer are modified, for example, a polyolefin is grafted with acrylic acid or maleic acid) or mixtures thereof. The preferred sizing agent is an epoxy resin. A particularly preferred epoxy resin is a bisphenol-A/epichlorohydrin based epoxy.

When a thermosetting resin is used as a sizing agent, the chopped strands should not be subjected to curing conditions (temperature and time) for the resin until the dispersion of filaments of the chopped strands is completed. It is believed that PANEX® 33 has an epoxy resin as the sizing agent.

The sizing agent may be applied to the carbon fiber strand by passing the strand through a solution or an emulsion of the sizing agent or through the sizing agent in a molten state. The sizing agent may also be applied to a strand in the state of fine particles and then heat melted at a temperature of from the melting point of the sizing agent to the decomposition point thereof. In order to make the penetration complete, a pressure may be added to the sizing agent melted, for example, by passing through a die. The average diameter of the fiber is preferably 1 to 50 µm.

The sizing agent should penetrate into the fiber strand uniformly. The temperature of the solution or the emulsion is generally from 10°C to 50°C. The concentration of the resin solution or the emulsion is generally from 0.5 to 30 weight percent, preferably from 2 to 20 weight percent, more preferably from 5 to 10 weight percent based on solution or emulsion weight.

The solvent solution is selected, suitably depending on a kind of the sizing agent, from water; alcohols such as ethyl alcohol and methyl alcohol; ketones such as acetone and methyethyl ketone; xylene, dichloromethane, N-methyl pyrrolidone, dimethyl formamide, tetrahydrofuran, toluene and the like, and compatible mixtures thereof. As a medium for the emulsion usually water is used, and a surfactant is used therewith, if desired.

During the penetration with the solution or the emulsion, the carbon fiber strand is applied with a tension generally of from 100 to 5,000 grams per strand, and preferably of from 500 to 2,000 grams per strand.

Generally, the amount of the sizing agent in the carbon fiber strand depends on the tension applied to the carbon fiber strand, twisting degree of carbon fiber strand and the sizing agent concentration in the solution or the emulsion.

The carbon fiber strand impregnated with a solution of sizing agent is subjected to drying, normally in air. To conduct the drying, the strand may be heated to the temperature of the boiling point of the solvent. The temperature should not be higher than the decomposition point and when a thermosetting resin is used as a sizing agent, the heating temperature should be lower than the curing temperature of the resin. The drying is usually conducted until the weight of the solvent in the sizing agent becomes less than 0.1 weight percent based on the total weight of the sizing agent and that of the solvent therein. When the sizing agent is applied in a molten state, the carbon fiber strand impregnated with the resin may be cooled until the resin becomes non-tacky or is solidified.

When the carbon fiber strand is impregnated with a solution of the sizing agent, the carbon fiber strand impregnated with the sizing agent preferably is provided with zero twists.

The amount of the sizing agent on the chopped carbon fiber is in the range of from 1 percent to 10 percent by weight, preferably from 3 percent to 8 percent by weight of the chopped fiber.

The thus prepared sized carbon fiber stand is then cut into a proper length.

The elastomeric composition containing the cross-linked elastomer and treated chopped carbon fiber may be used in the forming the sleeve 30.

The elastomeric compositions containing the treated carbon fiber may be cross-linked by sulfur, UV cure or peroxide cure system. Well-known classes of peroxides that may be used include diacyl peroxides, peroxyesters, dialkyl peroxides and peroxyketals. Specific examples include dicumyl peroxide, n-butyl-4,4-di(t-butylperoxy) valerate, 1,1-di(t-butylperoxy)-3,3,5-trimethylcyclohexane, 1,1-di(t-butylperoxy) cyclohexane, 1,1-di(t-amylperoxy) cyclohexane, ethyl-3,3-di(t-butylperoxy) butyrate, ethyl-3,3-di(t-amylperoxy) butyrate, 2,5-dimethyl-2,5-di(t-butylperoxy) hexane, t-butyl cumyl peroxide, α,α'-bis(t-butylperoxy)diisopropylbenzene, di-t-butyl peroxide, 2,5-dimethyl-2,5-di(t-butylperoxy) hexyne-3, t-butyl perbenzoate, 4-methyl-4-t-butylperoxy-2-pentanone and mixtures thereof. The preferred peroxide is α,α'-bis(t-butylperoxy) diisopropylbenzene. Typical amounts of peroxide ranges from 1 to 12 phr (based on active parts of peroxide). Preferably, the amount of peroxide ranges from 2 to 6 phr. A coagent is present during the free radical crosslinking reaction. Coagents are monofunctional and polyfunctional unsaturated organic compounds which are used in conjunction with the free radical initiators to achieve improved vulcanization properties. Representative examples include organic acrylates, organic methacrylates, divinyl esters, divinyl benzene, bismaleimides, triallylcyanurates, polyalkyl ethers and esters, metal salts of an alpha-beta unsaturated organic acid and mixtures thereof.

The coagent may be present in a range of levels. Generally speaking, the coagent is present in an amount ranging from 0.1 to 40 phr. Preferably, the coagent is present in an amount ranging from 2 to 20 phr.

As mentioned above, one class of coagents are acrylates and methacrylates Representative examples of such coagents include di-, tri-, tetra-and penta-functional acrylates, di-, tri-, tetra- and penta-functional methacrylates and mixtures thereof. Specific examples of such coagents include 1,3-butylene glycol diacrylate, 1,3-butylene glycol dimethacrylate, 1,4-butanediol diacrylate, 1,4-butanediol dimethacrylate, 1,6 hexanediol diacrylate, 1,6 hexanediol dimethacrylate, 2-henoxyethyl acrylate, alkoxylated diacrylate, alkoxylated nonyl phenol acrylate, allyl methacrylate, caprolactone acrylate, cyclohexane dimethanol diacrylate, cyclohexane dimethanol, methacrylate diethylene glycol diacrylate, diethylene glycol dimethacrylate, dipentaerythritol pentaacrylate, dipropylene glycol diacrylate, ditrimethylolpropane tetraacrylate, ethoxylated trimethylolpropane triacrylate, ethoxylated bisphenol A dimethacrylate, ethoxylated nonylphenol acrylate, ethoxylated tetrabromo bisphenol A diacrylate, ethoxylated bisphenol A diacrylate, ethoxylated bisphenol dimethacrylate, ethoxylated trimethylolpropane triacrylate, ethoxylated bisphenol A diacrylate, ethylene glycol dimethacrylate, glycidyl methacrylate, highly propoxylated glyceryl triacrylate, isobornyl acrylate, isobornyl methacrylate, isodecyl acrylate, isodecyl methacrylate, isooctyl acrylate, lauryl acrylate, methoxy polyethylene glycol monomethacrylate, methoxy polyethylene glycol monomethacrylate, neopentyl glycol diacrylate, neopentyl glycol dimethacrylate, octyldecyl acrylate, pentaacrylate ester, pentaerythritol tetraacrylate, pentaerythritol triacrylate, polyethylene glycol diacrylate, polyethylene glycol dimethacrylate, propoxylated glyceryl triacrylate, propoxylated neopentyl glycol diacrylate, propoxylated allyl methacrylate, propoxylated glyceryl triacrylate, propoxylated trimethylolpropane triacrylate, propoxylated trimethylolpropane triacrylate, stearyl acrylate, stearyl methacrylate, tetraethylene glycol diacrylate, tetraethylene glycol dimethacrylate, tetrahydrofurfuryl acrylate, tetrahydrofurfuryl methacrylate, tridecyl acrylate, tridecyl methacrylate, triethylene glycol diacrylate, triethylene glycol dimethacrylate, trifunctional acrylate ester, trifunctional methacrylate ester, trimethylolpropane triacrylate, trimethylolpropane triacrylate, trimethylolpropane trimethacrylate, tripropylene glycol diacrylate, tripropylene glycol diacrylate, tris (2-hydroxy ethyl) isocyanurate triacrylate, tris (2-hydroxy ethyl) isocyanurate triacrylate, and tris (2-hydroxy ethyl) isocyanurate trimethacrylate.

The metal salts of α,β-unsaturated organic acids include the metal salts of acids including acrylic, methacrylic, maleic, fumaric, ethacrylic, vinyl-acrylic, itaconic, methyl itaconic, aconitic, methyl aconitic, crotonic, alpha-methylcrotonic, cinnamic and 2,4-dihydroxy cinnamic acids. The metals may be zinc, cadmium, calcium, magnesium, sodium or aluminum. Zinc diacrylate and zinc dimethacrylate are preferred.

Conventional carbon blacks may also be present in the composition. Such carbon blacks are used in conventional amounts ranging from 5 to 250 phr. Preferably, the carbon blacks are used in an amount ranging from 20 to 100 phr. Representative examples of carbon blacks which may be used include those known by their ASTM designations N110, N121, N242, N293, N299, S315, N326, N330, M332, N339, N343, N347, N351, N358, N375, N550, N582, N630, N624, N650, N660, N683, N754, N762, N907, N908, N990, N991 and mixtures thereof.

It is readily understood by those having skill in the art that the rubber composition would be compounded by methods generally known in the rubber compounding art, such as mixing the various constituent rubbers with various commonly used additive materials such as, for example, curing aids and processing additives, such as oils, resins including tackifying resins and plasticizers, fillers, pigments, fatty acid, waxes, antioxidants and antiozonants. The additives mentioned above are selected and commonly used in conventional amounts.

Typical amounts of tackifier resins, if used, comprise 0.5 to 10 phr. Typical amounts of processing aids comprise 1 to 50 phr. Such processing aids can include, for example, polyethylene glycol, naphthenic and/or paraffinic processing oils. Typical amounts of antioxidants comprise about 1 to about 10 phr. A representative antioxidant is trimethyl-dihydroquinoline. Typical amounts of fatty acids, if used, which can include stearic acid comprise 0.5 to 3 phr. Typical amounts of waxes comprise 1 to 5 phr. Typical amounts of plasticizer, if used, comprise from 1 to 100 phr. Representative examples of such plasticizers include dioctyl sebacate, chlorinated paraffins, and the like. Various non-carbon black fillers and/or reinforcing agents may be added to increase the strength and integrity of the rubber composition for making the sleeve of the present invention. An example of a reinforcing agent is silica. Silica may be used in the present composition in amounts from 0 to 80 parts, and preferably 10 to 40 parts by weight based on 100 parts of rubber.

In addition to the chopped carbon fibers, the elastomer composition may also contain additional fibers or flock. The optional fibers or flock to be distributed throughout the elastomer mix may be any suitable material and is preferably non-metallic fibers such as cotton or fibers made of a suitable synthetic material include aramid, nylon, polyester, PTFE, fiberglass, and the like. Each fiber may have a diameter ranging between 0.001 inch to 0.050 inch (0.025 mm to 1.3 mm) and length ranging between 0.001 inch to 0.5 inch (0.025 mm to 12.5 mm). The fibers may be used in an amount ranging from 5 to 50 phr.

In addition to the above, solid inorganic lubricants may be present in the elastomer composition. Representative examples of such lubricants include molybdenum disulfide, PTFE, molybdenum diselenide, graphite, antimony trioxide, tungsten disulfide, talc, mica, tungsten diselenide and mixtures thereof. The amount of such solid inorganic lubricants, if used, will range from 1 to 25 phr.

The mixing of the rubber composition can be accomplished by methods known to those having skill in the rubber mixing art. For example, the ingredients may be mixed in one stage but are typically mixed in at least two stages, namely at least one non-productive stage followed by a productive mix stage. The final curatives including vulcanizing agents are typically mixed in the final stage which is conventionally called the "productive" mix stage in which the mixing typically occurs at a temperature, or ultimate temperature, lower than the mix temperature(s) than the preceding non-productive mix stage(s).

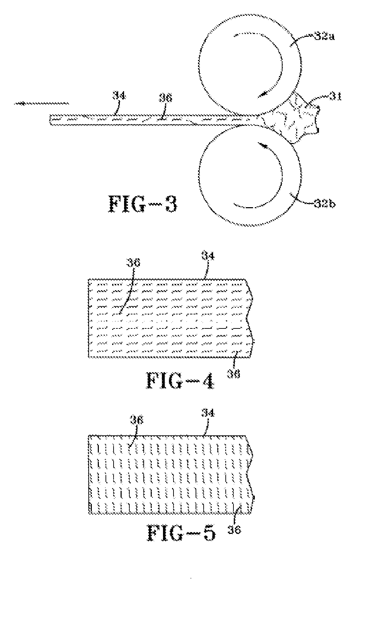

Once the rubber composition is mixed with the carbon fibers and carbon black, the carbon fibers have a random orientation. The rubber mixture 31 is then passed through calender rolls 32a, 32b, as shown in Figure 3 to form a sheet 34 with the fibers 36 predominately, approximately 65 or more % in the "machine" direction. Figure 4 is a top view of the sheet 34 with the fibers 36 in the "with" direction. Figure 5 is a top view of the sheet 34 which has been rotated 90° showing the fibers 36 in the "against" direction which is essentially perpendicular to the "with" direction.

Then the rubber sheet 34 with the fibers 36 in the "with" direction is formed into sleeve 30 so that the chopped carbon fibers that are embedded in an elastomeric matrix are in the direction of a centerline 38 extending longitudinally through sleeve 30, as shown in Figure 2. The sleeve in Figure 2 can have a wall thickness of preferably less than 13 mm (0.50 inches) and more preferably between 1 mm to 13 mm (0.0375 to 0.50 inches). The height of the sleeve 30 can be about 1.20 m (4 feet) or between 30 cm to 150 cm.

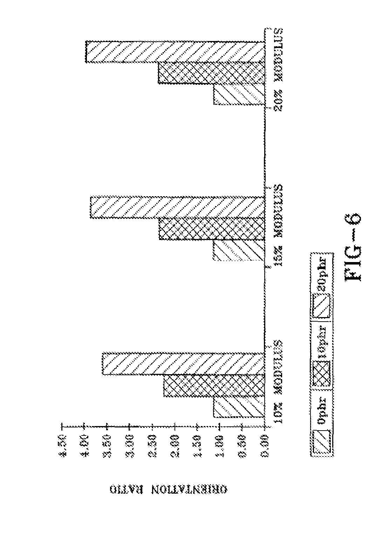

Referring to Figure 6, there is illustrated a graph showing the orientation ratio of the chopped fibers in the elastomeric sheet. The orientation ratio is the modulus of the "with" direction divided by the modulus of the "against" direction. The modulus in pounds per square inch (psi) is determined by stretching the elastomeric sheet in the "with" and "against" directions. In the x-axis of the graph, there is shown different percentages of modulus (how much the sheet is stretched , i.e. 10%, 15% and 20%).

In the case of 0 phr of chopped carbon fiber, it can be seen that the orientation ratio equals about 1 for all of the modulus points because there is no difference in the material in the "with" and "against" directions. In the case of 10 phr of chopped carbon fiber, it can be seen that the orientation ratio more than doubles while remaining approximately the same irrespective of the modulus point considered. This shows that by adding carbon fiber to the elastomeric material, the carbon fiber has a stronger effect increasing strength in the "with" direction than in the "against" direction. Finally, in the case of 20 phr of chopped carbon fiber, it can be seen that the orientation ratio increases more, now over 3.5, showing again the increasing strength in the "with" direction. Again, the orientation ratio remains approximately the same irrespective of the modulus point considered. This shows that by adding carbon fiber to the elastomeric material, the carbon fiber in the "with" direction, has a stronger effect in strengthening the sheet that the carbon fiber in the "against" direction.

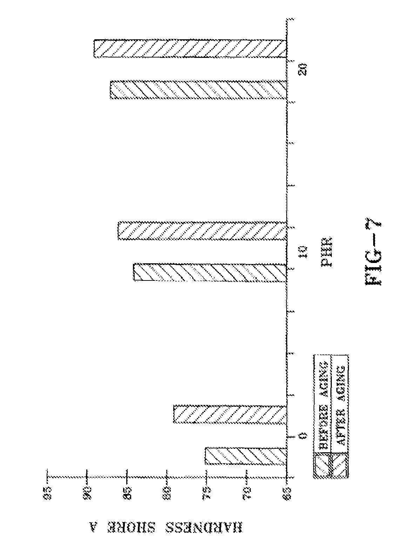

Referring to Figure 7, there is shown a graph illustrating the hardness in shore A of a series of EPM based compounds having different amounts of chopped carbon fibers embedded therein. For each value of phr, there is shown data for specimens that are not aged and identical specimens except that they have been air aged for 168 hours at 275° Fahrenheit (F).

It can be seen that the material is harder with a higher phr of carbon fiber. However, the presence of carbon fibers does not cause the hardness to increase significantly on air aging. This is an important aspect of the present invention because the sleeve is to be used in high temperature vulcanizing conditions. If it were to harden excessively on air aging, it would loose its flexibility and no longer be able to press against the uncured belt 14 wrapped around the drum 12, as shown in Figure 1.

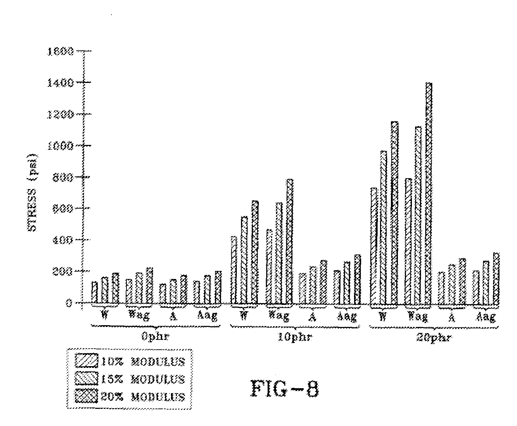

Referring to Figure 8, there is shown a chart of stress (psi) to stretch an elastomeric strip by varied amounts, i.e. 10%, 15%, and 20%. There are three groupings of specimens of EPM based elastomeric material with different amounts, i.e. 10 phr, 15 phr and 20 phr, of chopped carbon fibers embedded in the elastomeric matrix. In each of the three groups, four types of material are examined: a) an unaged material identified as W having the carbon fibers in the "with" direction; b) an aged material identified as Wag having the carbon fibers in the "with" direction; c) an unaged material identified as A having the carbon fibers in the "against" direction; and d) an aged material identified as Aag having the carbon fibers in the "against" direction.

Referring to the first group with 0 phr, irrespective of whether the elastomeric specimen was tested in the "with" or "against" direction, air aged or not, there was no significant difference in the stress at the three modulus points.

Referring to the second group with 10 phr, the elastomeric specimens with the carbon fiber in the "with" direction developed significantly more stress to stretch them the 10%, 15%, and 20%, whether aged or not, than the same elastomeric strips with the carbon fiber in the "against" direction, which were not dissimilar in the stress values from the elastomeric specimens with 0 phr of carbon fiber.

Referring to the third group with 20 phr, the elastomeric specimens with the carbon fiber in the "with" direction developed significantly more stress to stretch them the 10%, 15%, and 20%, whether aged or not, than the elastomeric specimens with the carbon fiber in the "against" direction which were not dissimilar in the stress values from the elastomeric specimens with 0 phr of carbon fiber. Also, there was a significant increase in the amount of stress to stretch them the 10%, 15%, and 20%, whether aged or not, as compared to the elastomeric specimens with the 10 phr carbon fiber in the "with" direction.

The conclusion from the graphs of Figures 6, 7 and 8 is that constructing a sleeve 30 from an elastomeric material with 10 phr and preferably 20 phr of carbon fiber in the "with" direction will provide a sleeve that is suitable for vulcanizing power transmission belts, as shown in Figure 1. Besides providing the reinforcement necessary for the sleeve 30 to stand up even after significant aging, as shown in Figures 7 and 8, it can be thinner than the prior art sleeve 10 and therefore allow for shorter vulcanization time. It is also thought that the inclusion of the carbon fibers along with the carbon black mixed into the elastomeric matrix of the sleeve will increase conduction of heat and thereby increase the efficiency of the sleeve. The presence of the reinforcing carbon fibers longitudinally oriented in the curing sleeve will also minimize the shrinkage caused by the repeated heating and cooling of the curing sleeve so that it will remain long enough to seal the building drum within the sleeve with the steel lid, thereby extending the life of the sleeve.

## Claims

1. A cylindrical sleeve (30) for use in a vulcanization process, comprising
a cross-linked rubber and
from 5 to 50 phr of chopped carbon fibers (36).

2. The sleeve of claim 1 wherein the carbon fibers (36) are oriented longitudinally to the sleeve (30).

3. The sleeve of claim 1 or 2, including a crosslinking agent of a peroxide in the range of 2 to 6 phr and/or a coagent in the range 2 to 20 phr.

4. The sleeve of claim 1, wherein said cross-linked rubber is selected from the group consisting of an ethylene alpha olefin elastomer, silicone rubber, polychloroprene, polybutadiene, epichlorohydrin, acrylonitrile rubber, hydrogenated acrylonitrile rubber, zinc salts of unsaturated carboxylic acid ester grafted hydrogenated nitrile butadiene elastomer, natural rubber, styrene-butadiene rubber, ethylene-vinyl-acetate copolymer, ethylene methacrylate copolymers and terpolymers, chlorinated polyethylene, chlorosulfonated polyethylene, alkylated chlorosulfonated polyethylene, trans-polyoctenamer, polyacrylic rubber, and mixtures thereof.

5. The sleeve of at least one of the previous claims, further including a sizing agent being applied to the surface of the carbon fibers (36) wherein said sizing agent is selected from the group consisting of epoxy resins, urethane modified epoxy resins, polyester resins, phenol resins, polyamide resins, polyurethane resins, polycarbonate resins, polyetherimide resins, polyamideimide resins, polystyrylpyridine resins, polyimide resins, bismaleimide resins, polysulfone resins, polyethersulfone resins, epoxy-modified urethane resins, polyvinyl alcohol resins, polyvinyl pyrolidene resins and mixtures thereof.

6. The sleeve of claim 5, wherein the amount of the sizing agent on the chopped carbon fibers (36) ranges from 1 percent to 10 percent by weight, alternately from 3 to 8 percent by weight, of the chopped fiber.

7. The sleeve of at least one of the previous claims, further including a sizing agent selected from the group consisting of thermoplastic resins, thermosetting resins and mixtures thereof.

8. The sleeve of claim 1 wherein the amount of chopped carbon fibers (36) ranges from 10 to 30, alternately from 15 to 20 phr.

9. The sleeve of at least one of the previous claims, wherein the diameter of the chopped carbon fibers (36) ranges from 0.001 to 0.05 mm and/or wherein the length of the chopped carbon fibers range from 0.5 to 75 mm.

10. The sleeve of at least one of the previous claims, wherein the sleeve (30) is constructed of an elastomeric composition.
